# EUROPEAN PATENT APPLICATION

(11) **EP 4 474 045 A1**
(43) Date of publication of application: **11.12.2024**
(21) Application number: 23749754.0
(22) Date of filing: 31.01.2023
(51) Int. Cl.: B01J 20/26, B01D 53/04, B01J 20/28, B01J 20/30, B01J 20/34

(54) **ACIDIC GAS ADSORBENT, STRUCTURE COMPRISING ACIDIC GAS ADSORBENT, ACIDIC GAS ADSORPTION DEVICE, AND ACIDIC GAS ADSORBENT PRODUCTION METHOD**

(30) Priority: 03.02.2022 JP 2022015861
(71) Applicant: NITTO DENKO CORPORATION, Ibaraki-shi Osaka 567-8680 (JP)
(72) Inventor: KANEDA, Ariyoshi, Ibaraki-shi, Osaka 567-8680 (JP); GOTO, Chisato, Ibaraki-shi, Osaka 567-8680 (JP)
(74) Representative: Hoffmann Eitle
(86) International application number: PCT/JP2023/003118
(87) International publication number: WO 2023/149438

(57) **Abstract**

The present invention provides a new acidic gas adsorbent suitable for adsorption of acidic gas. An acidic gas adsorbent 10 of the present invention includes a fiber 1 and a cover layer 2 including a polymer P and covering the fiber 1. The polymer P has a constitutional unit derived from an epoxy monomer, and an amino group. A structure 15 of the present invention includes the acidic gas adsorbent 10 and has an air flow path 14. An acidic gas adsorption device 200 of the present invention includes an adsorption part 221 having a gas inlet 222 and a gas outlet 223. The adsorption part 221 contains the acidic gas adsorbent 10.

## Description

### TECHNICAL FIELD

The present invention relates to an acidic gas adsorbent, a structure including the acidic gas adsorbent, an acidic gas adsorption device, and an acidic gas adsorbent production method.

### BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

For example, Non Patent Literature 1 discloses the use of nanofibrillated cellulose (NFC) to which an amino group is introduced, as an adsorbent. In Non Patent Literature 1, the amino group is introduced to the NFC by reacting an amino silane compound with the NFC.

### CITATION LIST

### Non Patent Literature

Non Patent Literature 1: Gebald, Christoph, "Development of amine-functionalized adsorbent for carbon dioxide capture from atmospheric air", Diss. ETH No. 21853

### SUMMARY OF INVENTION

### Technical Problem

A new acidic gas adsorbent suitable for adsorption of acidic gas is required.

### Solution to Problem

The present invention provides an acidic gas adsorbent including:
a fiber; and
a cover layer including a polymer and covering the fiber, wherein
the polymer has a constitutional unit derived from an epoxy monomer, and an amino group.

Further, the present invention provides a structure including the above acidic gas adsorbent and having an air flow path.

Further, the present invention provides an acidic gas adsorption device including
an adsorption part having a gas inlet and a gas outlet, wherein
the adsorption part contains the above acidic gas adsorbent.

Further, the present invention provides a production method for an acidic gas adsorbent, including a synthesis step of synthesizing a polymer on a surface of a fiber such that a cover layer covering the fiber is formed, wherein
the polymer has a constitutional unit derived from an epoxy monomer, and an amino group.

### Advantageous Effects of Invention

According to the present invention, a new acidic gas adsorbent suitable for adsorption of acidic gas can be provided.

### BRIEF DESCRIPTION OF THE DRAWINGS

FIG. 1 is a cross-sectional view schematically showing an acidic gas adsorbent according to one embodiment of the present invention.
FIG. 2 is a diagram for describing a method for measuring an adsorption amount of carbon dioxide by the acidic gas adsorbent.
FIG. 3A is a perspective view schematically showing an example of a structure including acidic gas adsorbents.
FIG. 3B is a perspective view schematically showing a modification of the structure including the acidic gas adsorbents.
FIG. 3C is a perspective view schematically showing another modification of the structure including the acidic gas adsorbents.
FIG. 4A is a perspective view schematically showing an example of an acidic gas recovery device.
FIG. 4B is a cross-sectional view showing a schematic configuration of a modification of the acidic gas recovery device.
FIG. 5 is an image showing the shape of an acidic gas adsorbent of Example 1.
FIG. 6 is an image showing the shape of an acidic gas adsorbent of Example 8.
FIG. 7 is a scanning electron microscope (SEM) image of the acidic gas adsorbent of Example 1.
FIG. 8 is an SEM image of an acidic gas adsorbent of Example 2.
FIG. 9 is an SEM image of an acidic gas adsorbent of Example 3.
FIG. 10 is an SEM image of an acidic gas adsorbent of Example 4.
FIG. 11 is an SEM image of an acidic gas adsorbent of Example 5.
FIG. 12 is an SEM image of an acidic gas adsorbent of Example 6.
FIG. 13 is an SEM image of an acidic gas adsorbent of Example 7.
FIG. 14 is an SEM image of the acidic gas adsorbent of Example 8.
FIG. 15A is a transmission electron microscope (TEM) image of a cross-section of a fiber included in the acidic gas adsorbent of Example 6.
FIG. 15B is an image showing a result of mapping of nitrogen element performed on the TEM image in FIG. 15A.
FIG. 15C is an image showing a result of mapping of silicon element performed on the TEM image in FIG. 15A.
FIG. 15D is an image showing a result of mapping of oxygen element performed on the TEM image in FIG. 15A.
FIG. 16A is an energy dispersive X-ray analysis (EDX) spectrum at a position XVIA in the TEM image in FIG. 15A.
FIG. 16B is an EDX spectrum at a position XVIB in the TEM image in FIG. 15A.

### DESCRIPTION OF EMBODIMENTS

An acidic gas adsorbent according to a first aspect of the present invention includes:
a fiber; and
a cover layer including a polymer and covering the fiber, wherein
the polymer has a constitutional unit derived from an epoxy monomer, and an amino group.

In a second aspect of the present invention, for example, in the acidic gas adsorbent according to the first aspect, the polymer has a crosslinked structure.

In a third aspect of the present invention, for example, in the acidic gas adsorbent according to the first or second aspect, the polymer includes a reaction product of a compound group including an amine monomer and an epoxy monomer.

In a fourth aspect of the present invention, for example, in the acidic gas adsorbent according to any one of the first to third aspects, the polymer has a glass transition temperature of 40°C or less.

In a fifth aspect of the present invention, for example, in the acidic gas adsorbent according to any one of the first to fourth aspects, a content of the polymer is 20 wt% or more.

In a sixth aspect of the present invention, for example, in the acidic gas adsorbent according to any one of the first to fifth aspects, the fiber is bound to the polymer.

In a seventh aspect of the present invention, for example, in the acidic gas adsorbent according to any one of the first to sixth aspects, the fiber includes at least one selected from the group consisting of an organic material and an inorganic material.

In an eighth aspect of the present invention, for example, in the acidic gas adsorbent according to the seventh aspect, the organic material includes chitosan.

In a ninth aspect of the present invention, for example, in the acidic gas adsorbent according to the seventh aspect, the inorganic material includes glass.

In a tenth aspect of the present invention, for example, in the acidic gas adsorbent according to any one of the first to ninth aspects, the fiber has a fiber diameter of 1 nm to 1000 nm.

In an eleventh aspect of the present invention, for example, in the acidic gas adsorbent according to any one of the first to tenth aspects, the cover layer has a thickness of 200 nm or less.

In a twelfth aspect of the present invention, for example, the acidic gas adsorbent according to any one of the first to eleventh aspects has a specific surface area of 0.05 m²/g or more.

In a thirteenth aspect of the present invention, for example, in the acidic gas adsorbent according to any one of the first to twelfth aspects, an adsorption amount a1 of carbon dioxide when the following adsorption test A1 is performed is 0.5 mmol/g or more,
adsorption test A1: mixed gas composed of carbon dioxide, nitrogen, and water vapor is continuously fed into a container containing the acidic gas adsorbent for 1000 minutes, wherein a concentration of the carbon dioxide in the mixed gas is 400 vol ppm, and the mixed gas has a temperature of 23°C and a humidity of 50%RH.

In a fourteenth aspect of the present invention, for example, in the acidic gas adsorbent according to the thirteenth aspect, a rate of an adsorption amount a2 (mmol/g) of carbon dioxide when the following adsorption test A2 is performed, relative to the adsorption amount a1 (mmol/g), is 40% or more,
adsorption test A2: the mixed gas is continuously fed into the container for 60 minutes.

In a fifteenth aspect of the present invention, for example, in the acidic gas adsorbent according to the thirteenth or fourteenth aspect, a rate of a desorption amount b (mmol/g) of carbon dioxide when the following desorption test B is performed, relative to the adsorption amount a1 (mmol/g), is 40% or more,
desorption test B: the acidic gas adsorbent after the adsorption test A1 is performed is heated at 65°C for 1.5 hours while the mixed gas is continuously fed into the container.

In a sixteenth aspect of the present invention, for example, the acidic gas adsorbent according to any one of the first to fifteenth aspects includes a plurality of the fibers and has a particulate shape or a sheet shape.

A structure according to a seventeenth aspect of the present invention includes the acidic gas adsorbent according to any one of the first to sixteenth aspects and has an air flow path.

An acidic gas adsorption device according to an eighteenth aspect of the present invention includes
an adsorption part having a gas inlet and a gas outlet, wherein
the adsorption part contains the acidic gas adsorbent according to any one of the first to sixteenth aspects.

A production method for an acidic gas adsorbent according to a nineteenth aspect of the present invention includes a synthesis step of synthesizing a polymer on a surface of a fiber such that a cover layer covering the fiber is formed, wherein
the polymer has a constitutional unit derived from an epoxy monomer, and an amino group.

In a twentieth aspect of the present invention, for example, in the production method according to the nineteenth aspect,
the fiber includes a functional group, and
the synthesis step includes
   reacting the functional group with a compound A to form a precursor of the polymer, and
   reacting the precursor, the compound A, and a compound B different from the compound A, to form the polymer bound to the fiber.

In a twenty-first aspect of the present invention, for example, in the production method according to the twentieth aspect,
the functional group includes an amino group,
the compound A includes an epoxy monomer, and
the compound B includes an amine monomer.

In a twenty-second aspect of the present invention, for example, in the production method according to the twentieth aspect,
the functional group includes an epoxy group,
the compound A includes an amine monomer, and
the compound B includes an epoxy monomer.

Hereinafter, details of the present invention will be described, but the following description is not intended to limit the present invention to specific embodiments.

### <Embodiment of acidic gas adsorbent>

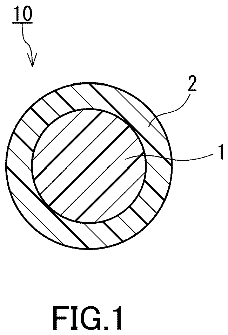

As shown in FIG. 1, an acidic gas adsorbent 10 of the present embodiment includes a fiber 1 and a cover layer 2 covering the fiber 1. The cover layer 2 may cover the entire surface of the fiber 1 or may partially cover the surface of the fiber 1. The cover layer 2 is, for example, in direct contact with the surface of the fiber 1. FIG. 1 shows an example of a cross-section of the fiber 1 in a direction orthogonal to a direction in which the fiber 1 extends.

The cover layer 2 includes a polymer P, and the polymer P has a constitutional unit derived from an epoxy monomer, and an amino group. The polymer P has a function of adsorbing acidic gas due to the amino group.

The polymer P has, for example, a crosslinked structure. The crosslinked structure of the polymer P is, for example, a chemical crosslinked structure. The chemical crosslinked structure means a covalent bond-mediated crosslinked structure. The polymer P preferably has a crosslinked structure with the amino group as a crosslinking point. According to the polymer P having a crosslinked structure, it is easy to adjust the robustness (or flexibility) of the cover layer 2, and it is easy to appropriately adjust the adsorption properties of acidic gas by the cover layer 2. The polymer P having a crosslinked structure also tends to improve the durability of the acidic gas adsorbent 10.

The present invention provides, in another aspect thereof, an acidic gas adsorbent 10 including:
a fiber 1; and
a cover layer 2 including a polymer P and covering the fiber 1, wherein
the polymer P has a crosslinked structure and has an amino group.

Preferably, the fiber 1 is bound to the above polymer P. The fiber 1 and the polymer P are bound to each other via covalent bond, for example. In other words, the polymer P as a polymer chain is introduced to the fiber 1. As an example, the polymer P as a polymer chain extends from the surface of the fiber 1, thereby forming the cover layer 2. In the case where the fiber 1 is bound to the polymer P, there is a tendency that detachment of the polymer P from the acidic gas adsorbent 10 can be suppressed when the acidic gas adsorbent 10 is heated in a regeneration process or the like. However, the fiber 1 may not necessarily be bound to the polymer P.

FIG. 1 shows one fiber 1 and one cover layer 2 covering the fiber 1. However, the acidic gas adsorbent 10 may include a plurality of fibers 1, and may include a plurality of cover layers 2 covering the plurality of fibers 1, respectively. In other words, the acidic gas adsorbent 10 may have a structure (aggregate structure) in which composites including fibers 1 and cover layers 2 are aggregated.

The acidic gas adsorbent 10 including a plurality of fibers 1 has, for example, a particulate shape or a sheet shape. In the present description, the particulate shape includes a spherical shape, an ellipsoid shape, a flake shape, a fiber shape, and the like. The sheet shape includes a flat plate shape, a corrugated shape, a pleated shape, and the like. The acidic gas adsorbent 10 having a particulate shape is, for example, granules in which composites including fibers 1 and cover layers 2 are aggregated. The acidic gas adsorbent 10 having a sheet shape may be a woven fabric or may be a nonwoven fabric. Thus, the acidic gas adsorbent 10 of the present embodiment can have various shapes by including the fibers 1. The acidic gas adsorbent 10 has a high degree of freedom in shape, and the shape thereof can be adjusted as appropriate according to an acidic gas adsorption device to be used, etc.

### (Fiber)

The fiber 1 preferably includes a functional group F capable of reacting with a compound for forming the polymer P, at a stage before the cover layer 2 is formed. Specific examples of the functional group F include an amino group, an epoxy group, and the like. With the functional group F, the polymer P bound to the fiber 1 can be easily formed. The fiber 1 may also include the functional group F at a stage after the cover layer 2 is formed.

The fiber 1 includes, for example, at least one selected from the group consisting of an organic material and an inorganic material. Examples of the organic material include: natural resins such as chitosan, chitin, cellulose, and derivatives thereof; polyolefin resins such as polyethylene and polypropylene; polyester resins such as polyethylene terephthalate; polyamide resins; polyvinyl alcohol resins; polyacrylonitrile resins; polyether ester resins; polyurethane resins; and the like. The organic material preferably includes a resin including the above functional group F, and particularly preferably includes chitosan. Chitosan includes an amino group as the functional group F.

Examples of the inorganic material include glass, metals, metal oxides, carbon materials, and the like. A specific example of the fiber 1 including a carbon material as an inorganic material is a carbon fiber. The inorganic material preferably includes glass. As an example, the fiber 1 may include an inorganic material and have the functional group F introduced to the surface of the inorganic material.

When the acidic gas adsorbent 10 includes a plurality of fibers 1, the acidic gas adsorbent 10 includes, for example, at least one selected from the group consisting of a fiber including an organic material (organic fiber) and a fiber including an inorganic material (inorganic fiber), as the fiber 1. The acidic gas adsorbent 10 may include both an organic fiber and an inorganic fiber.

The fiber 1 may further include fine particles. In the fiber 1, the fine particles are dispersed, for example, in a matrix including the above organic or inorganic material. The fine particles may have a porous structure. Examples of the material of the fine particles include silica, titania, and the like. A specific example of the fine particles is mesoporous silica particles.

The fiber 1 may be a short fiber or may be a long fiber. The fiber 1 may have a branched structure.

The fiber diameter of the fiber 1 (or the average fiber diameter of the plurality of fibers 1) is not limited in particular, and is, for example, 1 nm to 1000 µm. The fiber 1 may be a nanofiber having a fiber diameter of 1 nm to 1000 nm, or may be a microfiber having a fiber diameter of 1 µm to 1000 µm. The fiber diameter of the fiber 1 is preferably 800 nm or less, and may be 700 nm or less, 600 nm or less, 500 nm or less, 400 nm or less, 300 nm or less, 200 nm or less, 100 nm or less, or even 50 nm or less. The smaller the fiber diameter of the fiber 1 is, the more the acidic gas adsorbent 10 tends to have a larger specific surface area. The fiber 1 having a fiber diameter of 50 nm or less is suitable for producing the acidic gas adsorbent 10 having a particulate shape. The fiber diameter of the fiber 1 may be greater than 50 nm depending on the case. The fiber 1 having a fiber diameter greater than 50 nm is suitable for producing the acidic gas adsorbent 10 having a sheet shape. Depending on the case, the fiber diameter of the fiber 1 may be 1 µm or more, and may be 6.5 to 13 µm.

When the acidic gas adsorbent 10 includes a plurality of fibers 1, the average fiber diameter of the plurality of fibers 1 can be specified by the following method. First, the plurality of fibers 1 are observed using a scanning electron microscope. In an electron microscope image obtained, the fiber diameters of at least 15 fibers 1 are calculated by image processing. The average of the calculated values obtained can be regarded as the average fiber diameter of the fibers 1.

The content of the fiber 1 in the acidic gas adsorbent 10 is, for example, 80 wt% or less, and may be 60 wt% or less, 50 wt% or less, or even 30 wt% or less. The lower limit value of the content of the fiber 1 is not limited in particular, and is 10 wt%, for example.

### (Cover layer)

As described above, the polymer P included in the cover layer 2 has an amino group. The polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. The polymer P having a secondary amino group also has a tendency of easily desorbing the adsorbed acidic gas. That is, in the case of the polymer P having a secondary amino group, a regeneration process of the acidic gas adsorbent can be performed under a relatively mild condition. The polymer P may include a tertiary amino group, but does not have to include any tertiary amino group.

The weight ratio of nitrogen element in the polymer P is, for example, 5 wt% or more and preferably 10 wt% or more. The higher this weight ratio is, the more the acidic gas adsorption ability of the acidic gas adsorbent 10 tends to be improved. The upper limit value of the weight ratio of nitrogen element in the polymer P is not limited in particular, and is 30 wt%, for example. When all nitrogen element included in the polymer P is derived from the amino group, the above weight ratio of nitrogen element can be regarded as the weight ratio of the amino group in the polymer P.

The density of nitrogen element in the polymer P is, for example, 10.0 mmol/g or more, and may be 11.0 mmol/g or more, 12.0 mmol/g or more, 13.0 mmol/g or more, 13.5 mmol/g or more, 14.0 mmol/g or more, 14.5 mmol/g or more, 15.0 mmol/g or more, or even 15.5 mmol/g or more. The upper limit value of the density of nitrogen element is not limited in particular, and is 30 mmol/g, for example. In the present description, the density of nitrogen element in the polymer P means the amount of substance of nitrogen element included in 1 g of the polymer P. When all nitrogen element included in the polymer P is derived from the amino group, the density of nitrogen element can be regarded as the density of the amino group in the polymer P.

The density of nitrogen element in the polymer P can be measured according to the following method. First, a weight ratio w (wt%) of nitrogen element included in the polymer P is measured by using a commercially-available CHN elemental analyzer. On the basis of the obtained result, a density d of nitrogen element can be calculated from the following formula. Density d (mmol/g) = (weight ratio w (wt%) × 1000)/(atomic weight of nitrogen × 100)

The polymer P may include another functional group other than the amino group. Examples of the other functional group include a hydroxyl group, an ether group, an ester group, an amide group, and the like. The polymer P may or may not necessarily include a group including a silicon atom, for example, a silyl ether group.

As described above, the polymer P includes a constitutional unit U1 derived from an epoxy monomer. In other words, the polymer P is an amine polymer including the constitutional unit U1 derived from the epoxy monomer. The amine polymer includes, for example, a reaction product P1 of a compound group including an amine monomer and an epoxy monomer. Thus, the polymer P is, for example, a reaction product of a compound group including two or more compounds.

The compound group for forming the reaction product P1 includes an amine monomer and an epoxy monomer as described above. The reaction product P1 may be a polymer of a monomer group including an amine monomer and an epoxy monomer (especially, a polymer of an amine monomer and an epoxy monomer). The reaction product P1 may be a product (crosslinked product) in which an amine monomer is crosslinked by an epoxy monomer. When the reaction product P1 having a crosslinked structure is to be produced, at least one selected from the group consisting of an amine monomer and an epoxy monomer is preferably a polyfunctional monomer having two or more functional groups, especially three or more functional groups.

The amine monomer is a monomer including at least one amino group, and, for example, includes at least one primary amino group. The number of the primary amino groups included in the amine monomer is preferably two or more, and may be three or more, or may be four or more. The upper limit value of the number of the primary amino groups is not limited in particular, and is, for example, 100, or may be 10. The amine monomer may include a secondary amino group and a tertiary amino group, in addition to the primary amino group, but does not have to include any tertiary amino group. The ratio of the number of primary amino groups relative to the number of all amino groups in the amine monomer is not limited in particular, is, for example, 10% or more, preferably 20% or more, and more preferably 30% or more, and may be 40% or more. The higher this ratio is, the more crosslinking points in the amine monomer there are and the denser the crosslinked structure in the reaction product P1 is, and therefore there is a tendency that heat resistance and moisture heat resistance are improved. The upper limit value of this ratio is not limited in particular, is, for example, 80%, and may be 60%.

The molecular weight (depending on the case, the weight-average molecular weight) of the amine monomer is, for example, 50 or more, and may be 100 or more, 150 or more, 200 or more, 300 or more, 500 or more, 1000 or more, or even 1500 or more. The higher the molecular weight of the amine monomer is, the easier it is to adjust the density of nitrogen element in the reaction product P1 to be large. Furthermore, an amine monomer having a higher molecular weight tends to be safer to handle. The upper limit value of the molecular weight of the amine monomer is not limited in particular, and is 5000, for example. Depending on the case, the molecular weight of the amine monomer is less than 1000, and may be 500 or less or even 300 or less. The amine equivalent of the amine monomer is, for example, 10 g/eq. or more, preferably 20 g/eq. or more, and more preferably 30 g/eq. or more. The larger the amine equivalent of the amine monomer is, the easier it is to adjust the density of nitrogen element in the reaction product P1 to be large. The upper limit value of the amine equivalent of the amine monomer is not limited in particular, is, for example, 200 g/eq. or less, and may be 150 g/eq. or less, 100 g/eq. or less, or even 50 g/eq. or less. In the present description, the amine equivalent means the mass of the amine monomer per one equivalent of active hydrogen of the primary amino group included in the amine monomer. When the amine monomer includes repeating units (constitutional units), the number of constitutional units included in the amine monomer (degree of polymerization thereof) is not limited in particular, and is 5 to 100, for example.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, pentaethylenehexamine, hexaethyleneheptamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. The amine monomer preferably includes an aliphatic amine (especially, triethylenetetramine (TETA)) or an aliphatic polyamine (especially, polyethyleneimine (PEI)). The amine monomer can be used alone, or two types or more thereof may be used in combination.

The epoxy monomer is a monomer including at least one epoxy group. The number of the epoxy groups included in the epoxy monomer is preferably two or more, and may be three or more, or may be four or more. The larger the number of the epoxy groups is, the more crosslinking points in the epoxy monomer there are and the denser the crosslinked structure in the reaction product P1 is, and therefore there is a tendency that heat resistance and moisture heat resistance are improved. The upper limit value of the number of the epoxy groups included in the epoxy monomer is not limited in particular, and is ten, for example.

The molecular weight of the epoxy monomer is not limited in particular, and is, for example, less than 1000 and preferably 500 or less. The epoxy equivalent of the epoxy monomer is not limited in particular, and is, for example, 150 g/eq. or less and preferably 100 g/eq. or less. The smaller the epoxy equivalent of the epoxy monomer is, the more the density of nitrogen element in the reaction product P1 tends to increase. The lower limit value of the epoxy equivalent of the epoxy monomer is not limited in particular, and is 50 g/eq., for example. The epoxy equivalent means the mass of the epoxy monomer per one equivalent of the epoxy group included in the epoxy monomer.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; polyfunctional epoxy compounds having an ether group such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, and sorbitol polyglycidyl ether; and polyfunctional epoxy compounds having an amino group such as N,N,N',N'-tetraglycidyl-m-xylenediamine and 1,3-bis(N,N-diglycidylaminomethyl)cyclohexane.

The epoxy monomer may be an aromatic epoxy resin, a non-aromatic epoxy resin, or the like, depending on the case. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like.

The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the monomer group for forming the reaction product P1.

The epoxy monomer preferably includes a polyfunctional epoxy compound having an ether group such as ethylene glycol diglycidyl ether (EDE) and sorbitol polyglycidyl ether, or a polyfunctional epoxy compound having an amino group such as 1,3-bis(N,N-diglycidylaminomethyl)cyclohexane. The epoxy monomer may include a diepoxy alkane such as 1,7-octadiene diepoxide.

As described above, the polymer P includes the constitutional unit U1 derived from an epoxy monomer. When the polymer P is the reaction product P1, the polymer P further includes a constitutional unit U2 derived from an amine monomer. The content of the constitutional unit U1 in the polymer P, in particular, the reaction product P1, is 20 wt% to 70 wt%, for example. The content of the constitutional unit U2 in the polymer P, in particular, the reaction product P1, is, for example, 30 wt% or more and preferably 50 wt% or more. The upper limit value of the content of the constitutional unit U2 is not limited in particular, and is 80 wt%, for example.

A glass transition temperature Tg of the polymer P is not limited in particular, is, for example, 40°C or less, preferably 30°C or less, more preferably 20°C or less, and further preferably 15°C or less, and may be 10°C or less, may be 5°C or less, or may be 0°C or less. When the glass transition temperature Tg of the polymer P is low to this extent, the speed at which acidic gas is adsorbed by the acidic gas adsorbent 10 tends to be high. From the viewpoint of sufficiently ensuring the acidic gas adsorption ability of the acidic gas adsorbent 10 and from the viewpoint of heat resistance, the lower limit value of the glass transition temperature Tg of the polymer P is, for example, -100°C, preferably -50°C, and more preferably -10°C. In the present description, the glass transition temperature Tg means the midpoint glass transition temperature (T_{mg}) obtained according to the standards of JIS K7121:1987. Normally, the polymer P corresponds to a thermosetting resin. The polymer P is solid, for example, at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The cover layer 2 includes, for example, the polymer P, in particular, the polymer P having a crosslinked structure with the amino group as a crosslinking point, as a main component. In the present description, the "main component" means a component most included on a weight basis in the cover layer 2. The content of the polymer P in the cover layer 2 is, for example, 50 wt% or more, preferably 70 wt% or more, and more preferably 90 wt% or more, and may be 95 wt% or more, or may be 99 wt% or more. The cover layer 2 may be substantially composed of only the polymer P. The higher the content of the polymer P is, the more the acidic gas adsorption ability of the acidic gas adsorbent 10 tends to be improved.

The cover layer 2 may be substantially composed of only the polymer P, and may further include another component other than the polymer P. Examples of the other component include a reaction accelerator, a plasticizer, a pigment, a dye, an anti-aging agent, a conductive material, an antistatic agent, an ultraviolet absorber, a flame retardant, an antioxidant, and the like. The reaction accelerator is utilized, for example, when the polymer P is synthesized. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the reaction product P1, for example.

The thickness of the cover layer 2 is, for example, 200 nm or less, and may be 150 nm or less, 100 nm or less, 50 nm or less, 25 nm or less, 10 nm or less, or even 5 nm or less. The smaller the thickness of the cover layer 2 is, the higher the speed at which acidic gas is adsorbed by the acidic gas adsorbent 10 tends to be. The lower limit value of the thickness of the cover layer 2 is not limited in particular, and is 1 nm, for example.

The content of the cover layer 2 in the acidic gas adsorbent 10 is, for example, 20 wt% or more, and may be 40 wt% or more, 50 wt% or more, or even 70 wt% or more. The upper limit value of the content of the cover layer 2 is not limited in particular, and is 90 wt%, for example.

### (Acidic gas adsorbent)

The content of the polymer P in the acidic gas adsorbent 10 is, for example, 20 wt% or more, and may be 40 wt% or more, 50 wt% or more, or even 70 wt% or more. The higher the content of the polymer P is, the more the amount of acidic gas that can be adsorbed by the acidic gas adsorbent 10 tends to increase. The upper limit value of the content of the polymer P is not limited in particular, and is 90 wt%, for example.

The density of nitrogen element in the acidic gas adsorbent 10 is, for example, 1.0 mmol/g or more, and may be 3.0 mmol/g or more, 5.0 mmol/g or more, 7.0 mmol/g or more, or even 10.0 mmol/g or more. The upper limit value of the density of nitrogen element in the acidic gas adsorbent 10 is not limited in particular, and is 20 mmol/g, for example. In the present description, the density of nitrogen element in the acidic gas adsorbent 10 means the amount of substance of nitrogen element included in 1 g of the acidic gas adsorbent 10, and can be measured, for example, by the same method as the density of nitrogen element in the polymer P described above. When all nitrogen element included in the acidic gas adsorbent 10 is derived from the amino group, the density of nitrogen element can be regarded as the density of the amino group in the acidic gas adsorbent 10.

The specific surface area of the acidic gas adsorbent 10 is, for example, 0.05 m²/g or more, and may be 0.1 m²/g or more, 0.3 m²/g or more, 0.5 m²/g or more, 0.7 m²/g or more, 1.0 m²/g or more, 5.0 m²/g or more, 10 m²/g or more, 20 m²/g or more, 30 m²/g or more, 40 m²/g or more, or even 50 m²/g or more. The larger the specific surface area of the acidic gas adsorbent 10 is, the more the speed at which acidic gas is adsorbed by the acidic gas adsorbent 10 tends to increase. The upper limit value of the specific surface area of the acidic gas adsorbent 10 is not limited in particular, and is 100 m²/g, for example. When the acidic gas adsorbent 10 has a sheet shape, the upper limit value of the specific surface area may be 5.0 m²/g. The specific surface area of the acidic gas adsorbent 10 means the BET (Brunauer-Emmett-Teller) specific surface area in terms of nitrogen gas adsorption. The specific surface area of the acidic gas adsorbent 10 can be measured by a method conforming to the standards of JIS Z8830: 2013.

### (Production method for acidic gas adsorbent)

A production method for the acidic gas adsorbent 10 includes, for example, a synthesis step of synthesizing the polymer P on the surface of the fiber 1 such that the cover layer 2 covering the fiber 1 is formed. In particular, the polymer P bound to the fiber 1 can be synthesized by the following method. First, the fiber 1 including the functional group F capable of reacting with a compound (compound A) for forming the polymer P is prepared. As described above, specific examples of the functional group F include an amino group, an epoxy group, and the like.

The functional group F may be included in the material of the fiber 1 itself, or may be introduced to the surface of the fiber 1 by surface treatment. Examples of a method for introducing the functional group F to the surface of the fiber 1 include a method in which a silane coupling agent including the functional group F is reacted with the surface of the fiber 1, a method in which an energy beam such as an electron beam is applied to the surface of the fiber 1 to react this surface with a compound having the functional group F, etc. As an example, a hydroxyl group exists on the surface of the fiber 1 including an inorganic material such as glass. By reacting this hydroxyl group with the silane coupling agent including the functional group F such as an epoxy group, the functional group F can be introduced to the surface of the fiber 1.

Next, a dispersion liquid D including the fiber 1 is prepared. Organic solvents such as alcohols, or water can be used as the solvent of the dispersion liquid D. Next, the compound A for forming the polymer P is added to the dispersion liquid D. At this time, it is preferable to add the compound A in an amount that is excessive for the functional group F of the fiber 1. Next, the compound A is reacted with the functional group F of the fiber 1 to form a precursor of the polymer P. This reaction can be carried out, for example, by applying energy to the dispersion liquid D. The energy applied to the dispersion liquid D is preferably thermal energy. As an example, the above reaction can be caused to proceed by heating the dispersion liquid D at a temperature of 40°C to 100°C. However, the energy applied to the dispersion liquid D may be light energy. The precursor of the polymer P formed by the above reaction is bound to the fiber 1 via covalent bond, for example.

Next, a compound B for forming the polymer P is added to the dispersion liquid D. The compound B is a compound different from the compound A. In the dispersion liquid D to which the compound B has been added, for example, the unreacted compound A exists together with the compound B. In other words, the dispersion liquid D has a compound group including the compound A and the compound B. Depending on the content of the compound A in the dispersion liquid D, the compound A may be further added to the dispersion liquid D.

Next, when the precursor of the polymer P, the compound A, and the compound B are reacted, the polymer P bound to the fiber 1 can be formed. By the polymer P being formed, the cover layer 2 is formed. As described above, in the present embodiment, the synthesis step of the polymer P includes, for example, reacting the functional group F included in the fiber 1 with the compound A to form the precursor of the polymer P, and reacting the precursor, the compound A, and the compound B to form the polymer P bound to the fiber 1. In the synthesis step, the ratio (charging ratio) of the total value of the weight of the compound A and the weight of the compound B (total weight of the materials of the polymer P) to the weight of the fiber 1 used is, for example, 0.3 or more, and is 0.5 or more, 0.7 or more, 1.0 or more, 2.0 or more, 3.0 or more, 4.0 or more, 5.0 or more, 6.0 or more, 7.0 or more, 8.0 or more, 9.0 or more, or even 10.0 or more. The upper limit value of this ratio is not limited in particular, and is 30, for example.

The reaction of the precursor of the polymer P, the compound A, and the compound B can be carried out, for example, by applying energy to the dispersion liquid D. Examples of this energy include those described above for the reaction of the compound A and the functional group F.

As an example, when the functional group F includes an amino group, it is preferable that the compound A includes an epoxy monomer and the compound B includes an amine monomer. In this case, the compound A may include two or more epoxy monomers. The compound B may include two or more amine monomers.

As another example, when the functional group F includes an epoxy group, it is preferable that the compound A includes an amine monomer and the compound B includes an epoxy monomer. In this case, the compound A may include two or more amine monomers. The compound B may include two or more epoxy monomers.

The reaction of the precursor of the polymer P, the compound A, and the compound B is, for example, a polymerization reaction of an amine monomer and an epoxy monomer starting from the precursor, or a crosslinking reaction of an amine monomer via the precursor or an epoxy monomer.

The synthesis step of the polymer P is not limited to the above-described method. For example, the polymer P bound to the fiber 1 may be synthesized by reacting the functional group F, the compound A, and the compound B without forming the precursor of the polymer P in advance. The polymer P that is not bound to the fiber 1 may be synthesized by reacting the compound A and the compound B on the surface of the fiber 1 that does not include the functional group F. Other components other than the fiber 1, the compound A, and the compound B, such as the reaction accelerator described above, may be further added to the dispersion liquid D.

The production method of the present embodiment may further include a separation step of separating the fiber 1 covered with the cover layer 2, from the dispersion liquid D, and a drying step of drying the fiber 1. In the present embodiment, the shape of the acidic gas adsorbent 10 can be adjusted by appropriately setting the conditions for the separation step and the drying step. As an example, the acidic gas adsorbent 10 having a particulate shape can be easily produced by performing centrifugation in the separation step and then performing freeze-drying in the drying step. The acidic gas adsorbent 10 having a sheet shape can be easily produced by performing filtration and centrifugation in the separation step and then performing natural drying or heat drying in the drying process. In the filtration, for example, a metal mesh, filter paper, cloth, or the like can be used.

The shape of the acidic gas adsorbent 10 obtained by performing the filtration is, for example, a flat plate shape. The flat plate-shaped acidic gas adsorbent 10 may be further subjected to corrugating or pleating.

The acidic gas adsorbent 10 having a sheet shape can also be produced by other methods other than the method described above. For example, the acidic gas adsorbent 10 having a sheet shape may be produced by performing a known method such as heat pressing, dry papermaking, or wet papermaking, on the fiber 1 covered with the cover layer 2. The acidic gas adsorbent 10 having a sheet shape may be produced by synthesizing the polymer P by the above synthesis step using a sheet-shaped fiber substrate including the fiber 1. When the fiber substrate is used, a dip coating method in which the fiber substrate is dipped into a solution including the compound A and the compound B may be performed in the above synthesis step.

### (Adsorption properties and desorption properties of acidic gas adsorbent)

The acidic gas adsorbent 10 of the present embodiment tends to have excellent adsorption properties and desorption properties for acidic gas such as carbon dioxide. As an example, when the following adsorption test A1 is performed, an adsorption amount a1 of carbon dioxide may be 0.35 mmol/g or more. Furthermore, when the following desorption test B is performed, a desorption amount b of carbon dioxide may be 0.2 mmol/g or more.

Adsorption testA1: Mixed gas G composed of carbon dioxide, nitrogen, and water vapor is continuously fed into a container containing the acidic gas adsorbent 10 for 1000 minutes. Here, the concentration of the carbon dioxide in the mixed gas G is 400 vol ppm, and the mixed gas G has a temperature of 23°C and a humidity of 50%RH.

Desorption test B: The acidic gas adsorbent 10 after the adsorption test A1 is performed is heated at 65°C for 1.5 hours while the mixed gas G is continuously fed into the above container.

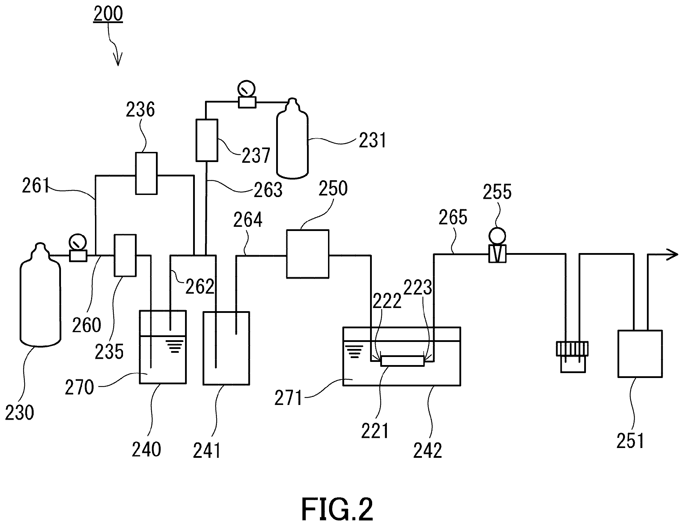

In the following, the adsorption test A1 and the desorption test B will be described in detail. In the adsorption testA1 and the desorption test B, measurement can be performed using a measurement device 200 shown in FIG. 2, for example. The measurement device 200 includes a first tank 230 and a second tank 231. As an example, the first tank 230 stores dry-state nitrogen, and the second tank 231 stores mixed gas of dry-state nitrogen and dry-state carbon dioxide. The concentration of carbon dioxide in the mixed gas in the second tank 231 is 5 vol%, for example.

The measurement device 200 further includes a first container 240 containing water 270, and a first path 260 for sending nitrogen from the first tank 230 to the first container 240. The first path 260 has one end connected to a gas outlet of the first tank 230, and the other end disposed in the water 270 in the first container 240. Nitrogen sent from the first tank 230 to the first container 240 is humidified by coming into contact with the water 270. On the first path 260, a massflow controller 235 for adjusting the flow rate of nitrogen that is sent from the first tank 230 to the first container 240 is disposed.

The measurement device 200 further includes a second container 241, a second path 262, and a bypass path 261. The second path 262 connects the first container 240 and the second container 241 to each other. Nitrogen sent to the first container 240 and humidified is sent through the second path 262 to the second container 241. The bypass path 261 is branched from the first path 260 at a position between the first tank 230 and the massflow controller 235 and is connected to the second path 262. A part of the nitrogen sent from the first tank 230 flows into the bypass path 261 and is sent through the second path 262 to the second container 241. On the bypass path 261, a massflow controller 236 for adjusting the flow rate of nitrogen that is sent from the first tank 230 to the bypass path 261 is disposed.

The measurement device 200 further includes a third path 263 for sending the mixed gas from the second tank 231 to the second path 262. The third path 263 has one end connected to a gas outlet of the second tank 231 and the other end connected to the second path 262. On the third path 263, a massflow controller 237 for adjusting the flow rate of the mixed gas that is sent from the second tank 231 to the second path 262 is disposed. The mixed gas sent to the second path 262 is sent through the second path 262 to the second container 241.

The measurement device 200 further includes a third container 242 and a fourth path 264. The third container 242 contains water 271 and an adsorption part 221 disposed in the water 271. In the third container 242, the temperature of the water 271 is maintained at 23°C. The adsorption part 221 has a gas inlet 222 and a gas outlet 223. The adsorption part 221 serves as a container containing the acidic gas adsorbent 10 therein. The adsorption part 221 is configured such that the water 271 does not permeate therein. Typically, the adsorption part 221 is a tube composed of a hydrophobic resin, e.g., a fluorine resin such as tetrafluoroethylene-perfluoroalkoxyethylene copolymer (PFA). As an example, the tube as the adsorption part 221 has an inner diameter of 4 mm and an outer diameter of 6 mm. The adsorption part 221 is configured to be attachable to/detachable from the measurement device 200.

The measurement device 200 can also be used as an acidic gas adsorption device including the adsorption part 221. The present invention provides, in another aspect thereof, an acidic gas adsorption device 200 including the adsorption part 221 having the gas inlet 222 and the gas outlet 223, wherein the adsorption part 221 contains the acidic gas adsorbent 10. The adsorption part 221 of the acidic gas adsorption device 200 may contain a structure described later including the acidic gas adsorbent 10.

The fourth path 264 connects the second container 241 and the third container 242 to each other. Specifically, the fourth path 264 is connected to the gas inlet 222 of the adsorption part 221 in the third container 242. In the fourth path 264, a first concentration meter 250 for measuring the concentration of carbon dioxide in the gas that is supplied to the adsorption part 221 is disposed. As the first concentration meter 250, for example, a CO₂/H₂O gas analyzer, LI-850-3, manufactured by LI-COR, Inc., can be used.

The measurement device 200 further includes a fifth path 265 connected to the gas outlet 223 of the adsorption part 221 and for discharging gas from the adsorption part 221 to the outside of the measurement device 200. On the fifth path 265, a back pressure valve 255 and a second concentration meter 251 are disposed. The back pressure valve 255 allows the pressure in the adsorption part 221 to be adjusted to a constant value. The second concentration meter 251 can measure the concentration of carbon dioxide in the gas that is discharged from the adsorption part 221. As the second concentration meter 251, for example, a CO₂/H₂O gas analyzer, LI-850-3, manufactured by LI-COR, Inc., can be used.

Each path of the measurement device 200 is composed of a metal-made or resin-made pipe, for example.

### [Pretreatment]

First, the acidic gas adsorbent 10 is prepared, and a drying process is performed thereon. The acidic gas adsorbent 10 that has not been subjected to a durability test described later is used. The drying process is performed by processing the acidic gas adsorbent 10 for two hours or more under a condition of 60°C, in a vacuum atmosphere, for example. Next, in a dry room having a dew point of about -60°C, the adsorption part 221 is filled with the acidic gas adsorbent 10 having been subjected to the drying process. The weight of the acidic gas adsorbent 10 with which the adsorption part 221 is filled is 50 mg, for example. Next, the fourth path 264 and the fifth path 265 are connected to both ends of the adsorption part 221, and the adsorption part 221 is immersed in the water 271 in the third container 242.

Next, nitrogen from the first tank 230 and the mixed gas from the second tank 231 are supplied to the second container 241 through the first path 260, the second path 262, the bypass path 261, and the third path 263 of the measurement device 200. In the second container 241, these gases are mixed, and the mixed gas G composed of carbon dioxide, nitrogen, and water vapor is obtained. In the second container 241, the concentration of carbon dioxide in the mixed gas G is adjusted to 400 vol ppm. The mixed gas G has a temperature of 23°C and a humidity of 50%RH. The mixed gas G is supplied to the adsorption part 221 through the fourth path 264, at a sufficient flow rate with respect to the weight of the acidic gas adsorbent 10, e.g., at a flow rate of 300 mL/min with respect to 50 mg of the acidic gas adsorbent 10. In the adsorption part 221, the pressure of the mixed gas G is adjusted by the back pressure valve 255, to 107 kPa, for example.

Next, in a state where the mixed gas G is supplied to the adsorption part 221, the adsorption part 221 is taken out of the third container 242, and the adsorption part 221 is immersed in a hot water bath (not shown) at 80°C for two hours or more. Immersion of the adsorption part 221 in the hot water bath is performed until the concentration of carbon dioxide measured by the first concentration meter 250 and the concentration of carbon dioxide measured by the second concentration meter 251 have substantially the same value. Accordingly, with respect to the acidic gas adsorbent 10 in the adsorption part 221, the pretreatment is completed.

### [Adsorption test]

Next, in a state where the mixed gas G is supplied to the adsorption part 221, the adsorption part 221 is taken out of the hot water bath and is immersed in the water 271 in the third container 242. Accordingly, a carbon dioxide adsorption test (adsorption test A1) is started with respect to the acidic gas adsorbent 10 in the adsorption part 221. The adsorption test is performed until 1000 minutes elapses from the start. Specifically, the mixed gas G is continuously fed into the adsorption part 221 for 1000 minutes. When the adsorption test is performed for 1000 minutes, adsorption of carbon dioxide by the acidic gas adsorbent 10 can, normally, be regarded as having reached equilibrium.

In the adsorption test A1, an amount of substance M1 of carbon dioxide adsorbed by the acidic gas adsorbent 10 until 1000 minutes from the start is measured. The amount of substance of carbon dioxide adsorbed by the acidic gas adsorbent 10 can be calculated from a result of measuring, over time, the difference between the concentration of carbon dioxide measured by the first concentration meter 250 and the concentration of carbon dioxide measured by the second concentration meter 251. On the basis of the amount of substance M1, the amount of substance of carbon dioxide adsorbed by 1 g of the acidic gas adsorbent 10 in 1000 minutes is calculated, and the obtained calculated value is identified as the adsorption amount a1.

### [Desorption test]

Next, in a state where the mixed gas G is continuously fed to the adsorption part 221, the adsorption part 221 is taken out from the third container 242 and immersed in a hot water bath (not shown) at 65°C. Accordingly, a desorption test (desorption test B) for carbon dioxide is started with respect to the acidic gas adsorbent 10 in the adsorption part 221. The desorption test is performed until 1.5 hours elapses from the start.

In the desorption test B, an amount of substance M2 of carbon dioxide desorbed from the acidic gas adsorbent 10 until 1.5 hours from the start is measured. The amount of substance of carbon dioxide desorbed from the acidic gas adsorbent 10 can be calculated from a result of measuring, over time, the difference between the concentration of carbon dioxide measured by the first concentration meter 250 and the concentration of carbon dioxide measured by the second concentration meter 251. On the basis of the amount of substance M2, the amount of substance of carbon dioxide desorbed from 1 g of the acidic gas adsorbent 10 in 1.5 hours is calculated, and the obtained calculated value is identified as the desorption amount b.

### [Adsorption amount and desorption amount]

With respect to the acidic gas adsorbent 10 of the present embodiment, the adsorption amount a1 of carbon dioxide when the adsorption test A1 is performed is preferably 0.4 mmol/g or more, and may be 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.1 mmol/g or more, 2.2 mmol/g or more, 2.3 mmol/g or more, or even 2.4 mmol/g or more. The upper limit value of the adsorption amount a1 of carbon dioxide is not limited in particular, and is 10 mmol/g, for example.

With respect to the acidic gas adsorbent 10 of the present embodiment, the desorption amount b of carbon dioxide when the desorption test B is performed is preferably 0.25 mmol/g or more, and may be 0.3 mmol/g or more, 0.5 mmol/g or more, 0.8 mmol/g or more, 1.0 mmol/g or more, 1.3 mmol/g or more, 1.5 mmol/g or more, 1.8 mmol/g or more, or even 2.0 mmol/g or more. The upper limit value of the desorption amount b of carbon dioxide is not limited in particular, and is 10 mmol/g, for example.

The rate (65°C recovery rate) of the desorption amount b (mmol/g) relative to the adsorption amount a1 (mmol/g) is, for example, 40% or more, and may be 45% or more, 50% or more, 60% or more, 70% or more, 80% or more, 90% or more, or even 95% or more. The upper limit value of the 65°C recovery rate is not limited in particular, and is 99%, for example.

With respect to the acidic gas adsorbent 10 of the present embodiment, when the following adsorption test A2 is performed, an adsorption amount a2 of carbon dioxide is preferably 0.05 mmol/g or more.

Adsorption test A2: The mixed gas G is continuously fed into a container (the above-described adsorption part 221) containing the acidic gas adsorbent 10 for 60 minutes.

The adsorption test A2 can be performed by the same method as the above-described adsorption test A1, except that the test time is changed from 1000 minutes to 60 minutes. The adsorption amount a2 of carbon dioxide when the adsorption test A2 is performed is preferably 0.1 mmol/g or more, and may be 0.2 mmol/g or more, 0.3 mmol/g or more, 0.4 mmol/g or more, 0.5 mmol/g or more, 0.6 mmol/g or more, 0.7 mmol/g or more, 0.8 mmol/g or more, 0.9 mmol/g or more, 1.0 mmol/g or more, 1.3 mmol/g or more, 1.5 mmol/g or more, 1.8 mmol/g or more, or even 2.0 mmol/g or more. The upper limit value of the adsorption amount a2 of carbon dioxide is not limited in particular, and is 10 mmol/g, for example.

The rate (60-min adsorption rate) of the adsorption amount a2 (mmol/g) relative to the adsorption amount a1 (mmol/g) is, for example, 40% or more, and may be 45% or more, 50% or more, 60% or more, 70% or more, 80% or more, or even 90% or more. The 60-min adsorption rate can be used as an indicator of the speed at which acidic gas is adsorbed. That is, it can be said that the higher the 60-min adsorption rate is, the higher the speed at which acidic gas is adsorbed is. The upper limit value of the 60-min adsorption rate is not limited in particular, and is 99%, for example.

### (Durability of acidic gas adsorbent)

The acidic gas adsorbent 10 of the present embodiment preferably has high durability. The durability of the acidic gas adsorbent 10 can be evaluated, for example, by performing a durability test with respect to the acidic gas adsorbent 10. The durability test can be performed, for example, by performing heat treatment in an environment of 85°C and 85%RH with respect to the acidic gas adsorbent 10.

As an example, when the heat treatment is performed in an environment of 85°C and 85%RH for 24 hours with respect to the acidic gas adsorbent 10, a maintenance rate R1 of the amount (mmol/g) of carbon dioxide that can be adsorbed is, for example, 30% or more, and may be 40% or more, 50% or more, 60% or more, 70% or more, 80% or more, 85% or more, 90% or more, or even 95% or more. The upper limit value of the maintenance rate R1 is not limited in particular, and is 99%, for example. Furthermore, when the heat treatment is performed in an environment of 85°C and 85%RH for 48 hours with respect to the acidic gas adsorbent 10, a maintenance rate R2 of the amount (mmol/g) of carbon dioxide that can be adsorbed is, for example, 30% or more, and may be 40% or more, 50% or more, 60% or more, 70% or more, 80% or more, or even 85% or more. The upper limit value of the maintenance rate R2 is not limited in particular, and is 99%, for example. For the acidic gas adsorbent 10, it can be said that the higher the maintenance rates R1 and R2 are, the higher the durability (moisture heat resistance) is. The acidic gas adsorbent 10 having high durability can withstand long-term use, for example.

The maintenance rate R1 can be identified in detail by the following method. First, the acidic gas adsorbent 10 is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 85%RH for 24 hours in air. Next, the acidic gas adsorbent 10 after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent 10 after treatment, an adsorption amount a3 of carbon dioxide when the above adsorption test A1 is performed is measured. On the basis of the obtained adsorption amount a3 and the adsorption amount a1 of carbon dioxide when the adsorption test A1 is performed with respect to the acidic gas adsorbent 10 before the durability test, the maintenance rate R1 can be calculated by the following formula. Maintenance rate R1 (%) = adsorption amount a3 (mmol/g) ÷ adsorption amount a1 (mmol/g) × 100

The adsorption amount a3 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.1 mmol/g or more, 2.2 mmol/g or more, or even 2.3 mmol/g or more. The upper limit value of the adsorption amount a3 of carbon dioxide is not limited in particular, and is 10 mmol/g, for example.

The maintenance rate R2 can be identified in detail by the following method. First, the acidic gas adsorbent 10 is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 85%RH for 48 hours in air. Next, the acidic gas adsorbent 10 after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent 10 after treatment, an adsorption amount a4 of carbon dioxide when the above adsorption test A1 is performed is measured. On the basis of the obtained adsorption amount a4 and the adsorption amount a1 of carbon dioxide when the adsorption test A1 is performed with respect to the acidic gas adsorbent 10 before the durability test, the maintenance rate R2 can be calculated by the following formula. Maintenance rate R2 (%) = adsorption amount a4 (mmol/g) ÷ adsorption amount a1 (mmol/g) × 100

The adsorption amount a4 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, or even 2.0 mmol/g or more. The upper limit value of the adsorption amount a4 of carbon dioxide is not limited in particular, and is 10 mmol/g, for example.

### (Usage of acidic gas adsorbent)

The acidic gas adsorbent 10 of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent 10 can be used according to the following method, for example. First, mixed gas including acidic gas is brought into contact with the acidic gas adsorbent 10. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent 10. However, the mixed gas that is brought into contact with the acidic gas adsorbent 10 may be pressurized.

The acidic gas adsorbent 10 having come into contact with the mixed gas adsorbs acidic gas included in the mixed gas. Operation of bringing the mixed gas into contact with the acidic gas adsorbent 10 is performed until acidic gas adsorption by the acidic gas adsorbent 10 reaches equilibrium, for example.

Next, a regeneration process is performed with respect to the acidic gas adsorbent 10 having adsorbed acidic gas. The regeneration process can be performed by heating the acidic gas adsorbent 10, for example. The heating temperature of the acidic gas adsorbent 10 is 50 to 80°C, for example. The acidic gas adsorbent 10 may be heated in a reduced-pressure atmosphere or a vacuum atmosphere. Through the heating of the acidic gas adsorbent 10, acidic gas is desorbed from the acidic gas adsorbent 10. Accordingly, the acidic gas adsorbent 10 is regenerated and the acidic gas adsorbent 10 can be repeatedly used. The acidic gas, in particular, carbon dioxide, desorbed from the acidic gas adsorbent 10 can be utilized as synthesis raw material for chemicals or dry ice. The adsorption operation of acidic gas by means of the acidic gas adsorbent 10 and the regeneration process of the acidic gas adsorbent 10 can be performed by using the measurement device 200 (acidic gas adsorption device) described above.

### <Embodiment of structure>

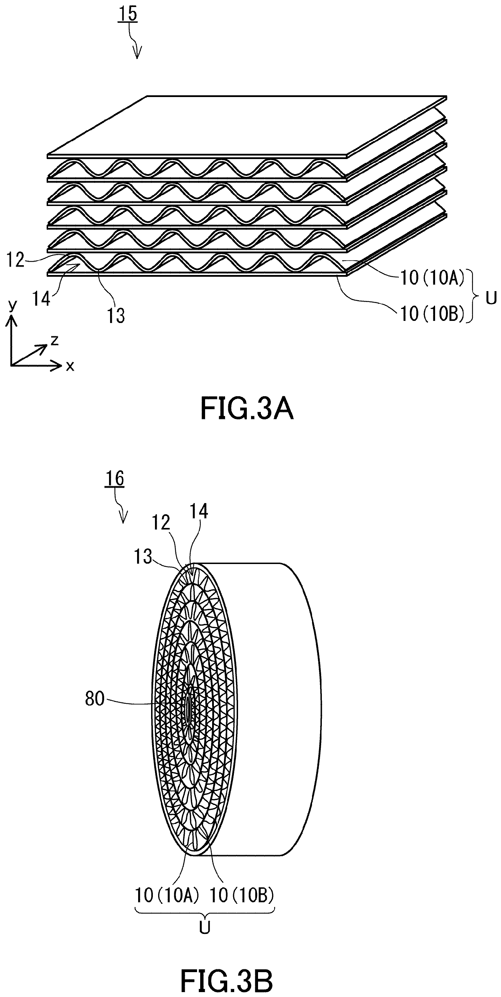

As shown in FIG. 3A, a structure 15 of the present embodiment includes the above-described acidic gas adsorbent 10 and has an air flow path 14. The structure 15 is typically a honeycomb structure having a plurality of air flow paths 14 extending in the same direction.

The acidic gas adsorbent 10 included in the structure 15 typically has a sheet shape. The structure 15 may or may not necessarily include a support supporting the acidic gas adsorbent 10, together with the acidic gas adsorbent 10.

The structure 15 includes, for example, an adsorbent unit U in which a corrugated acidic gas adsorbent 10A and a flat plate-shaped acidic gas adsorbent 10B are stacked. In the acidic gas adsorbent 10A, a plurality of hill portions 12 and a plurality of valley portions 13 are alternately aligned. The air flow path 14 is formed between each hill portion 12 or each valley portion 13 of the acidic gas adsorbent 10A and the acidic gas adsorbent 10B. In the present embodiment, a direction x is a direction (wave direction) in which the plurality of hill portions 12 and the plurality of valley portions 13 of the acidic gas adsorbent 10A are alternately aligned. A direction y is a direction in which the acidic gas adsorbents 10A and 10B are stacked in the adsorbent unit U. A direction z is a direction that is orthogonal to each of the directions x and y and in which the air flow paths 14 extend.

The structure 15 includes, for example, a plurality of adsorbent units U. The number of adsorbent units U in the structure 15 is not limited in particular, and is 2 to 100, for example. In the structure 15, the plurality of adsorbent units U are stacked in the direction y such that a plurality of acidic gas adsorbents 10A and a plurality of acidic gas adsorbents 10B are alternately aligned. When the plurality of adsorbent units U are stacked, the structure 15 has a block shape.

Each air flow path 14 is a through hole penetrating the structure 15 in the direction z. The air flow path 14 is surrounded by the acidic gas adsorbents 10A and 10B. In the structure 15, acidic gas is efficiently adsorbed by the acidic gas adsorbents 10A and 10B while moving in the direction z through the air flow path 14.

In the structure 15, the smaller the thicknesses of the acidic gas adsorbents 10A and 10B are, the larger the cross-sectional area of each air flow path 14 can be adjusted. The structure 15 in which the cross-sectional area of each air flow path 14 is large is suitable for reducing the pressure loss that occurs, for example, when in contact with acidic gas. With the structure 15 having reduced pressure loss, for example, the power of a fan used to move acidic gas can be reduced. If the amount of substance of the amino group per unit volume of the acidic gas adsorbent 10 is large, there is a tendency that acidic gas can be sufficiently adsorbed even if the thickness of the acidic gas adsorbent 10 is small.

### <Modification of structure>

The shape of the structure 15 including the acidic gas adsorbents 10 is not limited to the one shown in FIG. 3A. A structure 16 shown in FIG. 3B has a shape in which one adsorbent unit U is wound on a center tube 80. Except for this, the configuration of the structure 16 is the same as that of the structure 15.

The structure 16 has a columnar shape. In the structure 16, the plurality of hill portions 12 and the plurality of valley portions 13 of the acidic gas adsorbent 10A are alternately aligned in the circumferential direction of the structure 16. The air flow path 14 formed between each hill portion 12 or each valley portion 13 of the acidic gas adsorbent 10A and the acidic gas adsorbent 10B penetrates the structure 16 in a direction in which the center tube 80 extends. In the structure 16, acidic gas is efficiently adsorbed by the acidic gas adsorbents 10A and 10B while moving through the air flow path 14 in the direction in which the center tube 80 extends.

### <Another modification of structure>

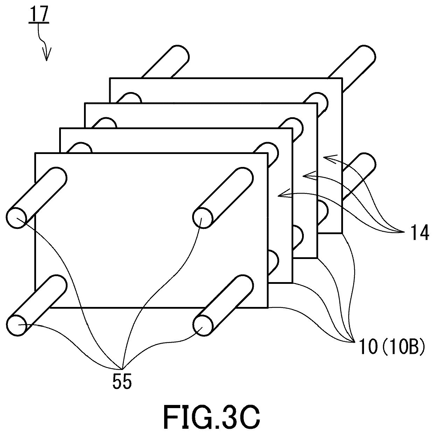

The structure does not have to include the acidic gas adsorbent 10A having a corrugated shape, and does not have to be a honeycomb structure such as the structures 15 and 16. A structure 17 shown in FIG. 3C includes only an acidic gas adsorbent 10B having a flat plate shape as the acidic gas adsorbent 10. Specifically, the structure 17 includes a plurality of acidic gas adsorbents 10B, and the plurality of acidic gas adsorbents 10B are aligned with voids therebetween. The void between two acidic gas adsorbents 10B serves as an air flow path 14.

The structure 17 may further include a fixing member 55 which fixes the plurality of acidic gas adsorbents 10B in order to ensure the above-described air flow paths 14. The fixing member 55 is, for example, a rod. As an example, a through hole is formed in each of the plurality of acidic gas adsorbents 10B so as to penetrate the acidic gas adsorbent 10B in the thickness direction thereof, and the plurality of acidic gas adsorbents 10B are fixed by inserting the rod as the fixing member 55 into the through hole of each acidic gas adsorbent 10B. The rod as the fixing member 55 may be a bolt having an external thread formed on a side surface thereof. In this case, the air flow path 14 can be more reliably ensured by screwing a nut onto the bolt at a position between two acidic gas adsorbents 10B. In this example, the nut serves as a spacer.

In the example of FIG. 3C, the plurality of acidic gas adsorbents 10B each have a rectangular shape in a plan view, and have through holes formed near four corners thereof. Furthermore, an acidic gas adsorbent 10C includes four fixing members 55, and the four fixing members 55 are inserted into the four through holes formed at the four corners of each acidic gas adsorbent 10B, respectively. However, the number and the positions of through holes formed in each acidic gas adsorbent 10B and the number of fixing members 55 are not limited to the example of FIG. 3C.

In the structure 17, acidic gas is efficiently adsorbed by two acidic gas adsorbents 10B while moving through the air flow path 14 between the two acidic gas adsorbents 10B.

### <Embodiment of acidic gas recovery device>

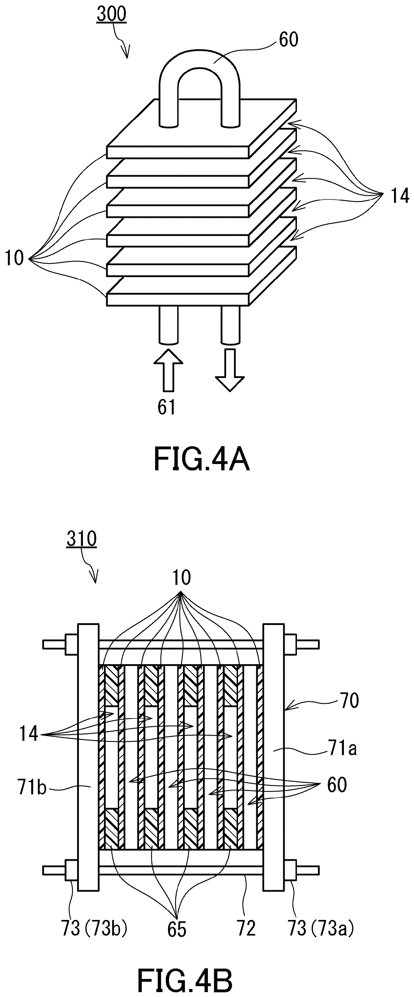

As shown in FIG. 4A, an acidic gas recovery device 300 of the present embodiment includes the above-described acidic gas adsorbent 10 and a medium path 60. In the acidic gas recovery device 300, during desorption operation in which acidic gas adsorbed by the acidic gas adsorbent 10 is desorbed from the acidic gas adsorbent 10, a heat medium 61 which heats the acidic gas adsorbent 10 passes through the medium path 60.

The acidic gas adsorbent 10 included in the acidic gas recovery device 300 typically has a sheet shape. The acidic gas recovery device 300 may or may not necessarily include a support supporting the acidic gas adsorbent 10, together with the acidic gas adsorbent 10.

The acidic gas recovery device 300 includes, for example, a plurality of acidic gas adsorbents 10. The plurality of acidic gas adsorbents 10 may be aligned with voids therebetween, and the void between two acidic gas adsorbents 10 may serve as an air flow path 14. In the acidic gas recovery device 300, the configurations of the acidic gas adsorbents 10 and the air flow paths 14 may be the same as those described for the structures 15 to 17.

In the acidic gas recovery device 300, the medium path 60 is composed of, for example, a pipe made of a metal such as copper, specifically, a heat transfer tube. In the acidic gas recovery device 300, the medium path 60 penetrates each acidic gas adsorbent 10 in the thickness direction of the acidic gas adsorbent 10, for example. Specifically, in the acidic gas adsorbents 10, through holes are formed so as to penetrate the acidic gas adsorbents 10 in the thickness direction thereof, and the medium path 60 is inserted into the through holes of the acidic gas adsorbents 10. The acidic gas recovery device 300 typically has a structure similar to that of a fin tube heat exchanger including heat transfer fins and a heat transfer tube penetrating the heat transfer fins.

The medium path 60 may have a U-shape, and may be inserted into two through holes formed in each acidic gas adsorbent 10. The number of through holes formed in each acidic gas adsorbent 10 and the number of medium paths 60 are not limited to those shown in FIG. 4A. For example, four or more through holes may be formed in each acidic gas adsorbent 10, and two or more medium paths 60 each having a U-shape may be inserted into the through holes of each acidic gas adsorbent 10.

As described above, the medium path 60 serves as a path for the heat medium 61 which heats the acidic gas adsorbent 10 during desorption operation. However, the medium path 60 can also be used as a path for a cooling medium that cools the acidic gas adsorbent 10 after the desorption operation. That is, the medium path 60 may serve as both a path for the heat medium 61 and a path for the cooling medium.

The acidic gas recovery device 300 further includes a casing (not shown) in which the acidic gas adsorbents 10 and the medium path 60 are housed. The casing has, for example, a mixed gas inlet for sending a mixed gas including acidic gas into the interior of the casing. The casing may further have a desorption gas outlet for discharging desorption gas desorbed from the acidic gas adsorbents 10, to the outside of the casing during desorption operation, and a purge gas inlet for sending purge gas to the inside of the casing. In the casing, the mixed gas inlet may also serve as a purge gas inlet. Furthermore, the casing may have a medium inlet for sending the heat medium 61 or the cooling medium to the medium path 60 and a medium outlet for discharging the heat medium 61 or the cooling medium from the medium path 60.

### [Method for operating acidic gas recovery device]

The acidic gas recovery device 300 repeatedly performs adsorption operation in which acidic gas is adsorbed by the acidic gas adsorbents 10 and desorption operation in which acidic gas adsorbed by the acidic gas adsorbents 10 is desorbed from the acidic gas adsorbents 10, for example. Acidic gas can be recovered by performing adsorption operation and desorption operation using the acidic gas recovery device 300.

### (Adsorption operation)

The adsorption operation of the acidic gas recovery device 300 is performed, for example, as follows. First, mixed gas including acidic gas is sent to the interior of the casing through the above-described mixed gas inlet. Examples of the mixed gas include those described above. The mixed gas comes into contact with the acidic gas adsorbents 10 while moving through the air flow paths 14, for example. Accordingly, the acidic gas adsorbents 10 adsorb the acidic gas included in the mixed gas. The adsorption operation is performed until acidic gas adsorption by the acidic gas adsorbents 10 reaches equilibrium, for example.

### (Desorption operation)

The desorption operation of the acidic gas recovery device 300 is performed, for example, as follows. First, purge gas is sent to the interior of the casing through the above-described purge gas inlet, and the purge gas is discharged to the outside of the casing through the desorption gas outlet. By this operation, the mixed gas remaining inside the casing can be discharged to the outside of the casing, and the interior of the casing can be filled with the purge gas. As the purge gas, for example, water vapor gas or gas including acidic gas such as carbon dioxide at a high concentration can be used. Instead of or together with the operation of sending the purge gas to the interior of the casing, an operation of depressurizing the interior of the casing may be performed. This depressurization operation can be performed, for example, by a depressurization device connected to the desorption gas outlet of the casing, or the like.

Next, in a state where the purge gas is supplied to the interior of the casing, the heat medium 61 is sent to the medium path 60. As the heat medium 61, hot water, high-temperature gas, or the like can be used. Specific examples of gas included in the high-temperature gas include chlorofluorocarbon, carbon dioxide, air, water vapor, and the like. The heat medium 61 can be prepared utilizing, for example, waste heat, a heat pump, self-heat regeneration, or the like.

By sending the heat medium 61 to the medium path 60, heat exchange occurs between the heat medium 61 and the acidic gas adsorbents 10 via the medium path 60, and the acidic gas adsorbents 10 are heated. The heating temperature of each acidic gas adsorbent 10 is 50 to 80°C, for example. Accordingly, the acidic gas is desorbed from the acidic gas adsorbents 10. The desorption gas desorbed from the acidic gas adsorbents 10 is discharged through the desorption gas outlet together with the purge gas. Accordingly, the acidic gas can be recovered. When the purge gas includes water vapor, the water vapor can be removed by cooling the purge gas discharged through the desorption gas outlet and condensing the water vapor. It is not necessarily necessary to use the heat medium 61 in order to heat the acidic gas adsorbents 10. For example, when a support supporting each acidic gas adsorbent 10 serves as a planar heater, the acidic gas adsorbent 10 may be heated by energizing the support.

The acidic gas recovery device 300 is configured such that the heat medium 61 does not come into direct contact with the desorption gas during the desorption operation. With the acidic gas recovery device 300, acidic gas can be efficiently recovered. The recovered acidic gas, in particular, carbon dioxide, can be utilized as synthesis raw material for chemicals or dry ice.

### (Preparation operation)

The acidic gas recovery device 300 may perform preparation operation for performing the adsorption operation after the desorption operation. The preparation operation is performed, for example, as follows. First, the supply of the purge gas to the interior of the casing is stopped, and the heat medium 61 is also discharged from the medium path 60. Next, a cooling medium is sent to the medium path 60. As the cooling medium, an antifreeze or the like can be used. Heat exchange occurs between the cooling medium and the acidic gas adsorbents 10 via the medium path 60, and the acidic gas adsorbents 10 are cooled. The acidic gas adsorbents 10 are cooled to normal temperature (25°C), for example. After the acidic gas adsorbents 10 are cooled, the preparation for the adsorption operation is completed by discharging the cooling medium from the medium path 60.

### <Modification of acidic gas recovery device>

The acidic gas recovery device is not limited to the one shown in FIG. 4A. For example, in an acidic gas recovery device 310 shown in FIG. 4B, a medium path 60 is formed between two acidic gas adsorbents 10. Specifically, in the acidic gas recovery device 310, among a plurality of voids formed between a plurality of acidic gas adsorbents 10, some voids serve as medium paths 60, and the remaining voids serve as air flow paths 14. The medium paths 60 and the air flow paths 14 are alternately aligned along the arrangement direction in which the plurality of acidic gas adsorbents 10 are arranged. The acidic gas recovery device 310 typically has a structure similar to that of a plate heat exchanger in which a plurality of heat transfer plates are stacked.

The acidic gas recovery device 310 preferably includes a support supporting each acidic gas adsorbent 10, together with the acidic gas adsorbents 10. In the acidic gas recovery device 310, for example, each acidic gas adsorbent 10 faces the air flow path 14, and each support faces the medium path 60. In the acidic gas recovery device 310, a spacer 65 is disposed in each air flow path 14, and a spacer (not shown) is also disposed in each medium path 60. These spacers are configured to ensure the air flow paths 14 and the medium paths 60, introduce an appropriate fluid into each path, and also prevent the fluid from leaking into other paths. In FIG. 4B, each air flow path 14 may be connected to the external space of the acidic gas recovery device 310 on the far side and the near side of the drawing sheet thereof, thereby allowing mixed gas to be taken into the air flow path 14 from the external space. Furthermore, a member may be disposed between each air flow path 14 and the external space so as to block the connection therebetween during desorption operation of the acidic gas recovery device 310.

The acidic gas recovery device 310 further includes a restraining member 70 which restrains the plurality of acidic gas adsorbents 10. The restraining member 70 has, for example, a pair of plate members 71a and 71b, a rod 72, and fixing members 73. The plate members 71a and 71b are aligned in the arrangement direction of the plurality of acidic gas adsorbents 10, and sandwich the plurality of acidic gas adsorbents 10. With the plate members 71a and 71b, a pressure can be applied to the plurality of acidic gas adsorbents 10 in the arrangement direction thereof. In the plate members 71a and 71b, the desorption gas outlet, the purge gas inlet, the medium inlet, the medium outlet, and the like which are described above for the acidic gas recovery device 310 may be formed.

Through holes are formed in the plate members 71a and 71b, respectively, and the rod 72 is inserted into the through holes of the plate members 71a and 71b. The rod 72 may be a bolt having an external thread formed on a side surface thereof. Each fixing member 73 fixes, for example, one plate member out of the plate members 71a and 71b and the rod 72 to each other. The fixing member 73 is typically a nut having an internal thread that can be screwed with the rod 72. The restraining member 70 has a fixing member 73a which fixes the plate member 71a and the rod 72 to each other, and a fixing member 73b which fixes the plate member 71b and the rod 72 to each other.

In the example of FIG. 4B, two rods 72 are fixed by the fixing members 73, respectively. However, the number of rods 72, etc., are not limited to the example of FIG. 4B.

For the acidic gas recovery device 310, the same operation method as the operation method described above for the acidic gas recovery device 300 can be performed. In the acidic gas recovery device 310, a medium path 60 is formed between two acidic gas adsorbents 10. With this configuration, the entirety of each acidic gas adsorbent 10 can be uniformly heated by the heat medium passing through each medium path 60 in the desorption operation.

Furthermore, unlike the acidic gas recovery device 300, the acidic gas recovery device 310 is configured such that the air flow paths 14 do not interfere with the medium paths 60. Therefore, in the acidic gas recovery device 310, the pressure loss caused by the mixed gas passing through the air flow paths 14 in the adsorption operation tends to be small.

Components such as the acidic gas adsorbents 10 are more easily detached from the acidic gas recovery device 310 than the acidic gas recovery device 300. By detaching the acidic gas adsorbents 10 from the acidic gas recovery device 310, it is easier to perform replacement of the acidic gas adsorbents 10. Furthermore, by detaching each component of the acidic gas recovery device 310, it is easier to perform maintenance such as cleaning operations on each component.

### [Example]

In the following, the present invention will be described in further detail using Examples and Comparative Examples. However, the present invention is not limited thereto.

### (Example 1)

First, a dispersion liquid (EFo-08002, manufactured by Sugino Machine Limited) including a chitosan nanofiber (CsNF) at a content of 2 wt% was prepared. A dispersion liquid D was obtained by mixing 5 g of this dispersion liquid and 5 g of tert-butanol and performing ultrasonic treatment. Next, 0.508 g of a solution of 0.203 g of octadiene diepoxide (ODE) and 1.00 g of 1,3-bis(N,N-diglycidylaminomethyl)cyclohexane (TETRAD-C, manufactured by MITSUBISHI GAS CHEMICAL COMPANY, INC.) diluted with tert-butanol was added to the dispersion liquid D. The dispersion liquid D was heated at 50°C for 5 hours to react the amino group included in the chitosan nanofiber with the epoxy monomer to form a precursor of a polymer P.

Next, the dispersion liquid D was cooled to room temperature, and 0.246 g of triethylenetetramine (TETA) (manufactured by Sigma-Aldrich Co. LLC.) was added to the dispersion liquid D. The dispersion liquid D was heated at 50°C for 3 hours to react the above precursor, the epoxy monomer, and the amine monomer to form the polymer P having a crosslinked structure.

Next, the dispersion liquid D was cooled to room temperature, 15 g of tert-butanol was added to the dispersion liquid D, and the dispersion liquid D was mixed well. The supernatant was removed from the dispersion liquid D by centrifugation to obtain a white gel. This gel was frozen by immersion in liquid nitrogen for 5 minutes, and further freeze-dried for 18 hours to obtain an acidic gas adsorbent of Example 1. This acidic gas adsorbent was granules in which composites of fibers and cover layers were aggregated.

### (Example 2)

An acidic gas adsorbent of Example 2 was obtained by the same method as in Example 1, except that the ratio (charging ratio) of the total value of the weight of the epoxy monomer and the weight of the amine monomer to the weight of the chitosan nanofiber used was changed as shown in Table 1.

### (Example 3)

An acidic gas adsorbent of Example 3 was obtained by the same method as in Example 1, except that ODE was not used as the epoxy monomer, and the ratio (charging ratio) of the total value of the weight of the epoxy monomer and the weight of the amine monomer to the weight of the chitosan nanofiber used was changed as shown in Table 1.

### (Example 4)

First, a dispersion liquid (EFo-08002, manufactured by Sugino Machine Limited) including a chitosan nanofiber at a content of 2 wt% was prepared. A dispersion liquid D was obtained by mixing 5 g of this dispersion liquid and 5 g of ion-exchanged water and performing ultrasonic treatment. Next, 1 g of a solution of 1.26 g of sorbitol polyglycidyl ether (DENACOL EX-614B, manufactured by Nagase ChemteX Corporation) diluted with ion-exchanged water was added to the dispersion liquid D. The dispersion liquid D was heated at 60°C for 3 hours to react the amino group included in the chitosan nanofiber with the epoxy monomer to form a precursor of a polymer P.

Next, the dispersion liquid D was cooled to room temperature, and 2 g of a solution of 1.86 g of polyethyleneimine (EPOMIN SP-003, manufactured by NIPPON SHOKUBAI CO., LTD., weight-average molecular weight: about 300) diluted with ion-exchanged water was added to the dispersion liquid D. The dispersion liquid D was heated at 60°C for 4 hours to react the above precursor, the epoxy monomer, and the amine monomer to form the polymer P having a crosslinked structure.

Next, the dispersion liquid D was cooled to room temperature, 15 g of ion-exchanged water was added to the dispersion liquid D, and the dispersion liquid D was mixed well. The supernatant was removed from the dispersion liquid D by centrifugation to obtain a white gel. This gel was frozen by immersion in liquid nitrogen for 5 minutes, and further freeze-dried for 18 hours to obtain an acidic gas adsorbent of Example 4. This acidic gas adsorbent was granules in which composites of fibers and cover layers were aggregated.

### (Example 5)

An acidic gas adsorbent of Example 5 was obtained by the same method as in Example 4, except that 1.06 g of TETRAD-C and 0.845 g of ethylene glycol diglycidyl ether (EDE) (manufactured by Sigma-Aldrich Co. LLC.) were used as the epoxy monomer, and the ratio of the total value of the weight of the epoxy monomer and the weight of the amine monomer to the weight of the chitosan nanofiber used was changed as shown in Table 1.

### (Example 6)

First, a dispersion liquid D including a glass fiber (GF) at a content of 1 wt% was prepared. To 50 g of the dispersion liquid D, 0.5 g of 3-glycidoxypropyl trimethoxysilane (KBM-403, manufactured by Shin-Etsu Chemical Co., Ltd.) was added. The dispersion liquid D was heated at 60°C for 1 hour to react the hydroxyl group on the surface of the glass fiber with the silane coupling agent to introduce an epoxy group to the surface of the glass fiber.

Next, 0.5 g of polyethyleneimine (EPOMIN SP-003, manufactured by NIPPON SHOKUBAI CO., LTD., weight-average molecular weight: about 300) and 1.9 g of TETA (manufactured by Sigma-Aldrich Co. LLC.) were added to the dispersion liquid D. The dispersion liquid D was heated at 60°C for 3 hours to react the epoxy group introduced to the surface of the glass fiber with the amine monomer to form a precursor of a polymer P.

Next, the dispersion liquid D was cooled to room temperature, and 0.5 g of sorbitol polyglycidyl ether (DENACOL EX-614B, manufactured by Nagase ChemteX Corporation) and 2.1 g of EDE (manufactured by Sigma-Aldrich Co. LLC.) were added to the dispersion liquid D. The dispersion liquid D was treated for 18 hours at room temperature to react the above precursor, the epoxy monomer, and the amine monomer to form the polymer P having a crosslinked structure.

Next, the dispersion liquid D was poured over a SUS mesh and filtered. Accordingly, a gel having a sheet shape was obtained. This gel had a disc shape having a diameter of about 5 cm. Next, the gel was dried at room temperature overnight, and then vacuum-dried at 60°C for 3 hours to obtain an acidic gas adsorbent of Example 6. This acidic gas adsorbent was a nonwoven fabric.

### (Example 7)

An acidic gas adsorbent of Example 7 was obtained by the same method as in Example 6, except that polyethyleneimine and sorbitol polyglycidyl ether were not used, and the ratio (charging ratio) of the total value of the weight of the epoxy monomer and the weight of the amine monomer to the weight of the glass fiber used was changed as shown in Table 2.

### (Example 8)

An acidic gas adsorbent of Example 8 was obtained by the same method as in Example 6, except that the ratio (charging ratio) of the total value of the weight of the epoxy monomer and the weight of the amine monomer to the weight of the glass fiber used was changed as shown in Table 2.

### [Observation results of acidic gas adsorbents]

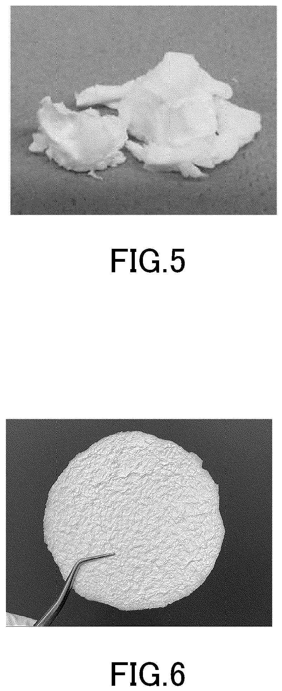

The shape of the acidic gas adsorbent of Example 1 was observed. The results are shown in FIG. 5. As can be seen from FIG. 5, the acidic gas adsorbent was granules in which composites of fibers and cover layers were aggregated. Similarly, the shape of the acidic gas adsorbent of Example 8 was observed. The results are shown in FIG. 6. As can be seen from FIG. 6, the acidic gas adsorbent was a nonwoven fabric.

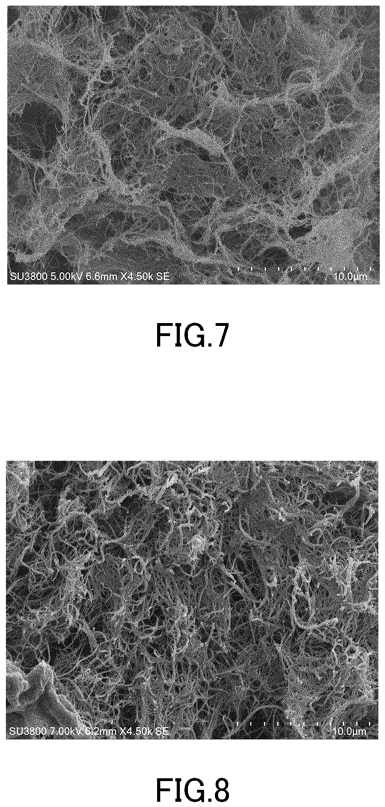

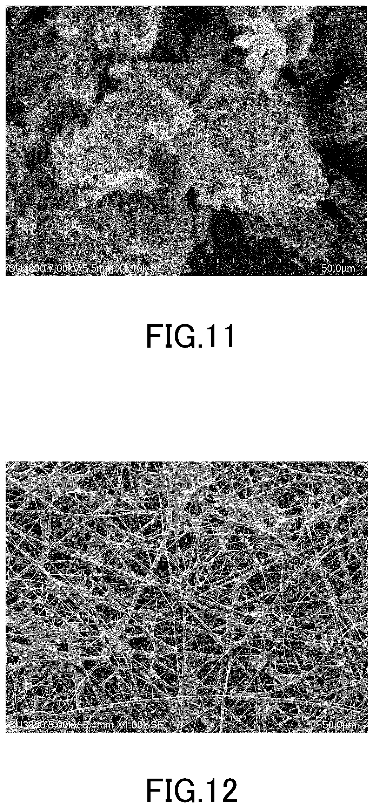

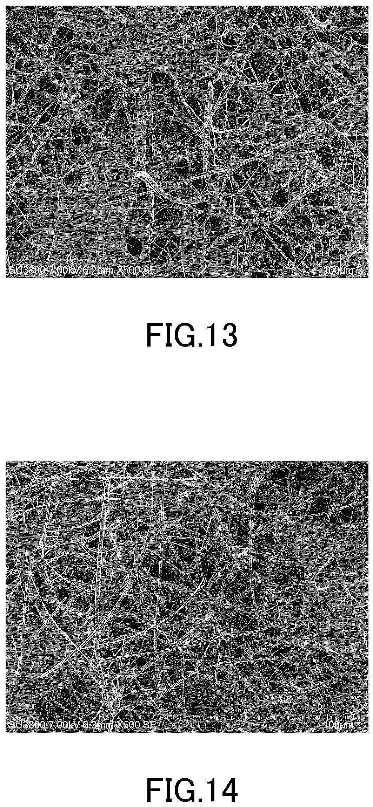

Furthermore, the acidic gas adsorbents of Examples 1 to 8 were observed using a scanning electron microscope (SEM). The results are shown in FIGS. 7 to 14. As can be seen from FIGS. 7 to 11, the chitosan nanofiber had a branched structure in the acidic gas adsorbents of Examples 1 to 5.

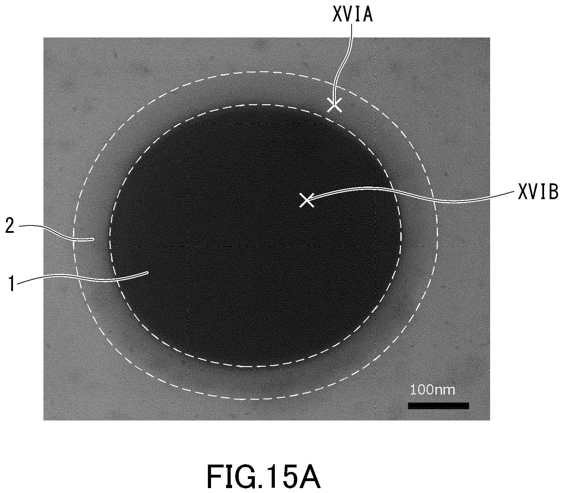

With respect to Example 6, a cross-section of the fiber (glass fiber) included in the acidic gas adsorbent was observed using a transmission electron microscope (TEM). Specifically, the acidic gas adsorbent was embedded in a resin, the fiber included in the acidic gas adsorbent was cut together with the resin, and a cross-section of the fiber was observed using the TEM. The results are shown in FIG. 15A. From a TEM image in FIG. 15A, a fiber 1 and a cover layer 2 covering the fiber 1 were confirmed. The diameter of the fiber 1 shown in the TEM image was about 450 nm. The thickness of the cover layer 2 was about 70 nm.

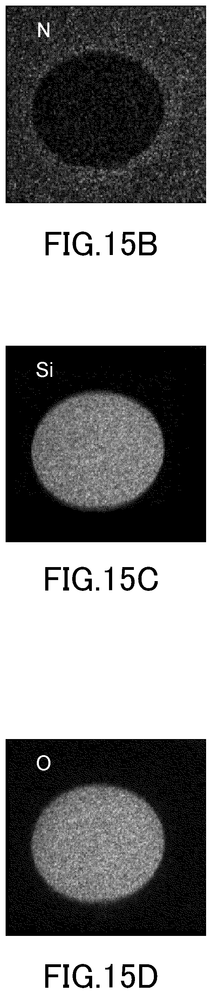

Furthermore, mapping of nitrogen element, silicon element, and oxygen element was performed for the TEM image in FIG. 15A. The results are shown in FIGS. 15B to 15D. From FIG. 15B, it can be seen that the cover layer 2 includes nitrogen element. From FIGS. 15C and 15D, it can be seen that the fiber 1 includes silicon element and oxygen element. In FIG. 15B, nitrogen element included in the resin in which the acidic gas adsorbent was embedded is also detected.

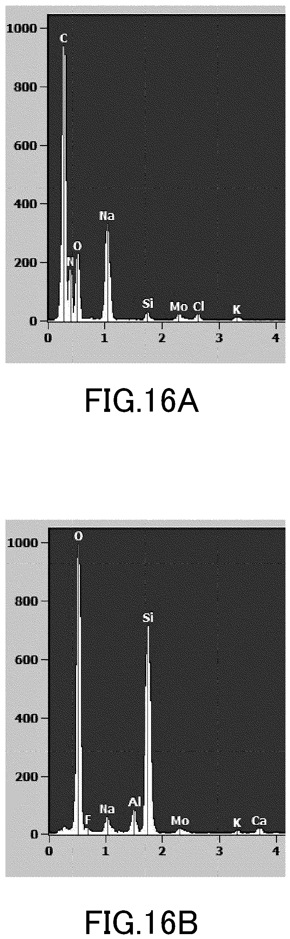

Furthermore, energy dispersive X-ray analysis (EDX) was performed at a position XVIA and a position XVIB shown in FIG. 15A. The obtained EDX spectra are shown in FIGS. 16A and 16B, respectively. As can be seen from FIG. 16A, carbon element, nitrogen element, and oxygen element were detected at the position XVIA due to the polymer P. As can be seen from FIG. 16B, silicon element and oxygen element were detected at the position XVIB due to the glass fiber.

### [Adsorption properties and desorption properties of carbon dioxide]

With respect to the produced acidic gas adsorbents, the adsorption tests A1 and A2 and the desorption test B were performed by the above-described methods to measure the adsorption amounts a1 and a2 and the desorption amount b. Furthermore, on the basis of these results, the rate (60-min adsorption rate) of the adsorption amount a2 (mmol/g) relative to the adsorption amount a1 (mmol/g) and the rate (65°C recovery rate) of the desorption amount b (mmol/g) relative to the adsorption amount a1 (mmol/g) were calculated.

### [Specific surface area]

With respect to the produced acidic gas adsorbents, the specific surface area was measured by a method conforming to the standards of JIS Z8830: 2013. For the measurement, a specific surface area measurement device (trade name "BERSORP-mini", manufactured by MicrotracBEL Corporation) was used.

### [Glass transition temperature Tg]

With respect to the polymers P included in the produced acidic gas adsorbents, the glass transition temperature Tg was measured by the following method. First, a polymer having the same composition as the polymer P included in each acidic gas adsorbent was separately produced, and about 5 mg of this polymer was set in a differential scanning calorimeter (DSC2500, manufactured by TA Instruments). Using this device, the temperature was increased from 30°C to 200°C at a temperature increase rate of 10°C/min in a nitrogen atmosphere and maintained at that temperature for 1 minute. Next, the acidic gas adsorbent was cooled to -50°C at a temperature decrease rate of 10°C/min and maintained at that temperature for 1 minute, and then the temperature was increased to 200°C at a temperature increase rate of 10°C/min. In a DSC curve at the second temperature increase, a first baseline before specific heat change appeared, a second baseline after specific heat change appeared, and a tangent line passing through a point at which the slope became maximum among bent portions due to the specific heat change, were identified. The intermediate temperature between the intersection of the first baseline and the tangent line and the intersection of the second baseline and the tangent line was identified as the glass transition temperature Tg.

### [Density of nitrogen element]

The density of nitrogen element in each polymer P was calculated on the basis of the charging amounts of the epoxy monomer and the amine monomer used.

### [Content of polymer P]

With respect to the acidic gas adsorbents of Examples 6 to 9, thermogravimetric analysis (TGA) was performed to measure the content of the polymer P in each acidic gas adsorbent.

**[Table 1]**

| | Example 1 | Example 2 | Example 3 | Example 4 | Example 5 |
|---|---|---|---|---|---|
| Material of polymer P | TETA/TC /ODE | TETA/TC /ODE | TETA/TC | SP-003 /EX614B | SP-003 /TC/EDE |
| Fiber | CsNF | CsNF | CsNF | CsNF | CsNF |
| Charging ratio [-] (*1) | 0.51 | 2.2 | 3.0 | 5.0 | 4.0 |
| 1000-m in adsorption amount a1 [mmol/g] | 0.48 | 1.04 | 1.89 | 2.47 | 1.03 |
| 60-m in adsorption rate [%] | 77 | 78 | 75 | 92 | 71 |
| 65°C recovery rate [%] | 92 | 99 | 93 | 89 | 96 |
| Specific surface area [m²/g] | 59 | 35 | >30 | >12 | >30 |
| Glass transition temperature Tg [°C] | - | - | 34 | - | 34 |
| Density of nitrogen element in polymer P [mmol/g] | 14.0 | 13.9 | 15.0 | 15.7 | 11.0 |
| Form | Granule | Granule | Granule | Granule | Granule |

| | | | | | |
|---|---|---|---|---|---|
| (*1) Ratio of the total weight of the materials of the polymer P to the weight of the fiber used. | | | | | |

**[Table 2]**

| | Example 6 | Example 7 | Example 8 |
|---|---|---|---|
| Material of polymer P | TETA/EX614B /SP-003/EDE | TETA/EDE | TETA/EX614B /SP-003/EDE |
| Fiber | KBM-403/GF | KBM-403/GF | KBM-403/GF |
| Charging ratio [-] (*1) | 6.3 | 10 | 10 |
| 1000-min adsorption amount a1 [mmol/g] | 0.87 | 1.40 | 1.64 |
| 60-min adsorption rate [%] | 77 | 54 | 45 |
| 65°C recovery rate [%] | 97 | 97 | 94 |
| Specific surface area [m²/g] | 0.7 | 0.6 | 0.4 |
| Glass transition temperature Tg [°C] | 6.0 | -12.2 | -6.8 |
| Density of nitrogen element in polymer P [mmol/g] | 12.0 | 12.4 | 11.9 |
| Content of polymer P [wt%] | 49.4 | 58.9 | 64.8 |
| Form | Nonwoven fabric | Nonwoven fabric | Nonwoven fabric |

| | | | |
|---|---|---|---|
| (*1) Ratio of the total weight of the materials of the polymer P to the weight of the fiber used. | | | |

As can be seen from Tables 1 and 2, the acidic gas adsorbents of Examples 1 to 8 all had good adsorption properties and desorption properties for carbon dioxide. In particular, the acidic gas adsorbents of Examples 3, 4, and 8 had an adsorption amount a1 of 1.5 mmol/g or more, a 60-min adsorption rate of 40% or more, and a 65°C recovery rate of 70% or more, and had excellent adsorption properties and desorption properties. Among these acidic gas adsorbents, the acidic gas adsorbents of Examples 3 and 4 had a 60-min adsorption rate of 70% or more and had a particularly high speed at which carbon dioxide was adsorbed.

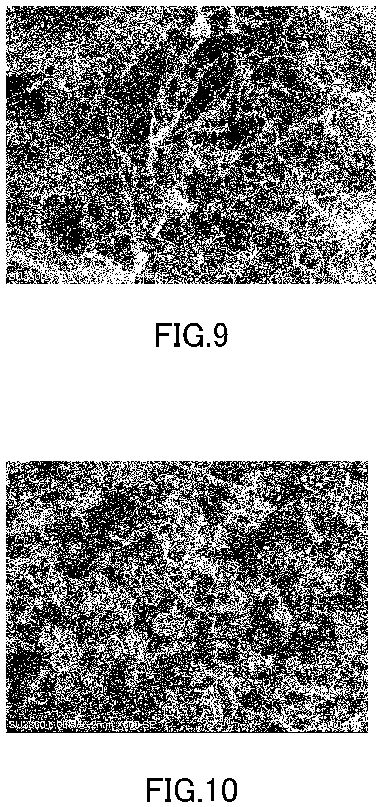

As described above, Non Patent Literature 1 discloses the use of nanofibrillated cellulose (NFC) in which an amino group is introduced by a reaction with an amino silane compound, as an adsorbent. The adsorption properties of this adsorbent for carbon dioxide are described in Figure 10 of Non Patent Literature 1. From Figure 10, it can be seen that the adsorption amount of carbon dioxide when the adsorption test was performed for 1000 minutes on an adsorbent (4-AEAPDES-NFC) having best adsorption properties is about 1.39 mmol/g, and the rate (60-min adsorption rate) of the adsorption amount of carbon dioxide when the adsorption test was performed for 60 minutes, relative to this adsorption amount, is about 40%. From this, it can be found that in the acidic gas adsorbents of Examples 1 to 8, the adsorption amount of carbon dioxide when the adsorption test was performed for 1000 minutes is the same as or higher than that of the conventional adsorbent, and the 60-min adsorption rate is higher than that of the conventional adsorbent.

The concentration of carbon dioxide in the mixed gas used in the adsorption test in Non Patent Literature 1 is 500 vol ppm, which is higher than the concentration (400 vol ppm) of carbon dioxide in the mixed gas G in the adsorption tests A1 and A2 performed with respect to the acidic gas adsorbents of the Examples. If the conditions of the adsorption tests A1 and A2 are applied to Non Patent Literature 1, it is inferred that the above adsorption amount and 60-min adsorption rate will be smaller values. Furthermore, Figure 10 of Non Patent Literature 1 shows the adsorption properties for granule adsorbents. Item 2.4.1 of Non Patent Literature 1 states that the adsorption amount of carbon dioxide is as small as 0.06 mmol/g for an adsorbent having a sheet shape.

### [Durability test]

With respect to the acidic gas adsorbent of Example 8, the durability test was performed by the above-described method to measure the adsorption amounts a3 and a4 of carbon dioxide. Furthermore, the rate (maintenance rate R1) of the adsorption amount a3 (mmol/g) relative to the adsorption amount a1 (mmol/g) and the rate (maintenance rate R2) of the adsorption amount a4 (mmol/g) relative to the adsorption amount a1 (mmol/g) were calculated. The results are shown in Table 3.

**[Table 3]**

| Time of durability test | CO₂ adsorption amount [mmol/g] | Maintenance rate [%] |
|---|---|---|
| 0 h | 1.64 (adsorption amount a1) | - |
| 24 h | 1.60 (adsorption amount a3) | 97 (maintenance rate R1) |
| 48 h | 1.46 (adsorption amount a4) | 89 (maintenance rate R2) |

As can be seen from Table 3, it can be said that the acidic gas adsorbent of Example 8 has high maintenance rates R1 and R2 and has high durability.

### INDUSTRIAL APPLICABILITY

The acidic gas adsorbent of the present embodiment can adsorb carbon dioxide in atmospheric air, for example.

## Claims

1. An acidic gas adsorbent comprising:
a fiber; and
a cover layer including a polymer and covering the fiber, wherein
the polymer has a constitutional unit derived from an epoxy monomer, and an amino group.

2. The acidic gas adsorbent according to claim 1, wherein the polymer has a crosslinked structure.

3. The acidic gas adsorbent according to claim 1, wherein the polymer includes a reaction product of a compound group including an amine monomer and an epoxy monomer.

4. The acidic gas adsorbent according to claim 1, wherein the polymer has a glass transition temperature of 40°C or less.

5. The acidic gas adsorbent according to claim 1, wherein a content of the polymer is 20 wt% or more.

6. The acidic gas adsorbent according to claim 1, wherein the fiber is bound to the polymer.

7. The acidic gas adsorbent according to claim 1, wherein the fiber includes at least one selected from the group consisting of an organic material and an inorganic material.

8. The acidic gas adsorbent according to claim 7, wherein the organic material includes chitosan.

9. The acidic gas adsorbent according to claim 7, wherein the inorganic material includes glass.

10. The acidic gas adsorbent according to claim 1, wherein the fiber has a fiber diameter of 1 nm to 1000 nm.

11. The acidic gas adsorbent according to claim 1, wherein the cover layer has a thickness of 200 nm or less.

12. The acidic gas adsorbent according to claim 1, having a specific surface area of 0.05 m²/g or more.

13. The acidic gas adsorbent according to claim 1, wherein an adsorption amount a1 of carbon dioxide when the following adsorption test A1 is performed is 0.5 mmol/g or more,
adsorption test A1: mixed gas composed of carbon dioxide, nitrogen, and water vapor is continuously fed into a container containing the acidic gas adsorbent for 1000 minutes, wherein a concentration of the carbon dioxide in the mixed gas is 400 vol ppm, and the mixed gas has a temperature of 23°C and a humidity of 50%RH.

14. The acidic gas adsorbent according to claim 13, wherein a rate of an adsorption amount a2 (mmol/g) of carbon dioxide when the following adsorption test A2 is performed, relative to the adsorption amount a1 (mmol/g), is 40% or more,
adsorption test A2: the mixed gas is continuously fed into the container for 60 minutes.

15. The acidic gas adsorbent according to claim 13, wherein a rate of a desorption amount b (mmol/g) of carbon dioxide when the following desorption test B is performed, relative to the adsorption amount a1 (mmol/g), is 40% or more,
desorption test B: the acidic gas adsorbent after the adsorption test A1 is performed is heated at 65°C for 1.5 hours while the mixed gas is continuously fed into the container.

16. The acidic gas adsorbent according to claim 1, comprising a plurality of the fibers and having a particulate shape or a sheet shape.

17. A structure comprising the acidic gas adsorbent according to any one of claims 1 to 16, and having an air flow path.

18. An acidic gas adsorption device comprising an adsorption part having a gas inlet and a gas outlet, wherein
the adsorption part contains the acidic gas adsorbent according to any one of claims 1 to 16.

19. A production method for an acidic gas adsorbent, comprising a synthesis step of synthesizing a polymer on a surface of a fiber such that a cover layer covering the fiber is formed, wherein
the polymer has a constitutional unit derived from an epoxy monomer, and an amino group.

20. The production method according to claim 19, wherein
the fiber includes a functional group, and
the synthesis step includes
reacting the functional group with a compound A to form a precursor of the polymer, and
reacting the precursor, the compound A, and a compound B different from the compound A, to form the polymer bound to the fiber.

21. The production method according to claim 20, wherein
the functional group includes an amino group,
the compound A includes an epoxy monomer, and
the compound B includes an amine monomer.

22. The production method according to claim 20, wherein
the functional group includes an epoxy group,
the compound A includes an amine monomer, and
the compound B includes an epoxy monomer.
